# EUROPEAN PATENT SPECIFICATION

(11) **EP 2 923 869 B1**
(45) Date of publication and mention of the grant of the patent: **31.10.2018**
(21) Application number: 13856410.9
(22) Date of filing: 13.11.2013
(51) Int. Cl.: B60H 1/22, F25B 1/00, B60H 1/00, F25B 5/04, F25B 6/04

(54) **VEHICULAR HEAT PUMP APPARATUS, AND VEHICULAR AIR CONDITIONING APPARATUS**
FAHRZEUGWÄRMEPUMPENVORRICHTUNG UND FAHRZEUGKLIMAANLAGENVORRICHTUNG
APPAREIL DE POMPE À CHALEUR DE VÉHICULE, ET APPAREIL DE CONDITIONNEMENT D'AIR DE VÉHICULE

(30) Priority: 20.11.2012 JP 2012254165
(43) Date of publication of application: 30.09.2015
(73) Proprietor: Panasonic Intellectual Property Management Co., Ltd., Osaka-shi, Osaka 540-6207 (JP)
(72) Inventor: NODA, Yoshitoshi, Osaka 540-6207 (JP)
(74) Representative: Schwabe - Sandmair - Marx
(86) International application number: PCT/JP2013/006666
(87) International publication number: WO 2014/080594

(56) References cited:
- EP-A1- 0 504 455
- GB-A- 2 071 294
- JP-A- H08 108 739
- JP-A- 2005 112 247
- JP-A- 2006 327 427
- JP-A- 2007 064 173
- JP-A- 2007 278 624
- JP-A- 2010 042 698
- JP-A- 2011 140 291

## Description

### Technical Field

The present invention relates to a vehicle heat pump apparatus and a vehicle air-conditioning apparatus.

### Background Art

There is an automobile so-called hybrid electric vehicle (HEV) or plug-in hybrid vehicle (PHV) provided with both an internal combustion engine and an electric motor. Typically, a vehicle air-conditioning apparatus mounted in such a vehicle provides heating to a vehicle interior using heat of the internal combustion engine and Joule heat generated by electrical power of a battery.

In addition, an air-conditioning apparatus configured to perform a cooling operation using a heat pump cycle is typically used. The heat pump cycle includes a compressor disposed in an engine compartment; an outside heat exchanger disposed on a front side of a vehicle or at a position in which air can be introduced to the outside heat exchanger; an evaporator disposed on an intake air path of the vehicle interior; an expansion valve; and the like. A high-temperature and high-pressure refrigerant compressed by the compressor is delivered to the outside heat exchanger and is cooled, and the cooled refrigerant is further brought into a low-temperature and low-pressure state by the expansion valve, and is delivered to the evaporator. The evaporator cools air supplied into the vehicle interior. The evaporator is provided in a heating, ventilation, and air conditioning system (hereinafter, referred to as an HVAC system) installed in the vehicle interior.

In the related art, there have been several proposals on a vehicle air-conditioning apparatus that provides heating to the vehicle interior using a heat pump so as not to waste electrical power of the battery (for example, refer to Patent Literature (hereinafter, referred to as "PTL") 1).

### Citation List

### Patent Literature

PTL 1
Japanese Patent Application Laid-Open No. HEI 8-197937

JP 2010 042698 discloses to provide an air conditioner for a vehicle capable of ensuring a predetermined flow rate of coolant by controlling movement of heat between a refrigeration cycle and a cooling water circuit. The air conditioner for the vehicle performs control so as to perform heat exchange between the coolant and cooling water using a water coolant heat exchanger when it satisfies a predetermined condition when a control mode is a dehumidification/heating mode. Specifically, the control device controls giving/receiving of heat of the coolant and water by controlling the opening/closing state of first to third changeover valves and valve opening of a first expansion valve, and a calorific value of medium flowing in a different flow passage can be effectively used.

### Summary of Invention

### Technical Problem

In the conventional vehicle air-conditioning apparatus which uses the heat pump cycle only during a cooling operation, a refrigerant pipe pattern is relatively simple as described above.

However, there is a problem in that the conventional vehicle air-conditioning apparatus configured to perform a heating operation using the heat pump cycle has a refrigerant pipe pattern quite different from that of the conventional vehicle air-conditioning apparatus configured to use the heat pump cycle only during the cooling operation.

In an automobile, various configuration elements such as an engine, a motor, a transmission, an air-conditioning compressor, and an intake air path are mounted in a small space. Accordingly, the layout flexibility of the components is low.

In the automotive field, a technical improvement is attempted via a so-called minor change in which a configuration is not considerably changed but is partially changed.

The vehicle air-conditioning apparatus may be improved as a minor change of a vehicle, and in this case, the configuration of the vehicle air-conditioning apparatus needs to be modified without affecting other components of the vehicle.

Refrigerant pipes of the vehicle air-conditioning apparatus using the heat pump cycle are installed so as to avoid interference with other components of the vehicle. For this reason, a small change in the refrigerant pipe pattern is a pre-requisite for modifying the vehicle air-conditioning apparatus without affecting other components of the vehicle. Unlike cooling water pipes, for example, the refrigerant pipes are made of aluminum so as to resist a high pressure. For this reason, making a change in the layout of the refrigerant pipes is not an easy task. In addition, a significant change in refrigerant pipes is not favorable because such a change considerably affects the layout of other components of the vehicle.

An object of the present invention is to provide a vehicle heat pump apparatus and a vehicle air-conditioning apparatus each enabling a heating operation using a heat pump cycle without involving a significant change in a refrigerant pipe pattern compared to that of a conventional vehicle air-conditioning apparatus configured to use a heat pump cycle only during a cooling operation.

### Solution to Problem

The problem is solved by the subject-matter of claim 1. The dependent claims are directed to embodiments of advantage.

### Advantageous Effects of Invention

According to the present invention, it is possible not only to perform a cooling operation but also to easily perform a heating operation using a heat pump cycle by connecting the vehicle heat pump apparatus to both the outside heat exchanger and the evaporator via pipes including one refrigerant outlet section and two refrigerant introduction sections. In addition, it is possible to reduce changes in a refrigerant pipe pattern compared to that in a conventional vehicle air-conditioning apparatus which performs the cooling operation using the heat pump cycle.

### Brief Description of Drawings

FIG. 1 is a configuration diagram illustrating a vehicle heat pump apparatus and a vehicle air-conditioning apparatus of an embodiment of the present invention;
FIG. 2 is a diagram illustrating a cooling operation performed in the vehicle air-conditioning apparatus of the embodiment;
FIG. 3 is a diagram illustrating a heating operation performed in the vehicle air-conditioning apparatus of the embodiment;
FIG. 4 is a diagram illustrating changes to refrigerant pipes from a conventional vehicle air-conditioning apparatus; and
FIG. 5 is a configuration diagram illustrating a variation of an exemplary vehicle heat pump apparatus.

### Description of Embodiment

Hereinafter, an embodiment of the present invention will be described in detail with reference to the accompanying drawings.

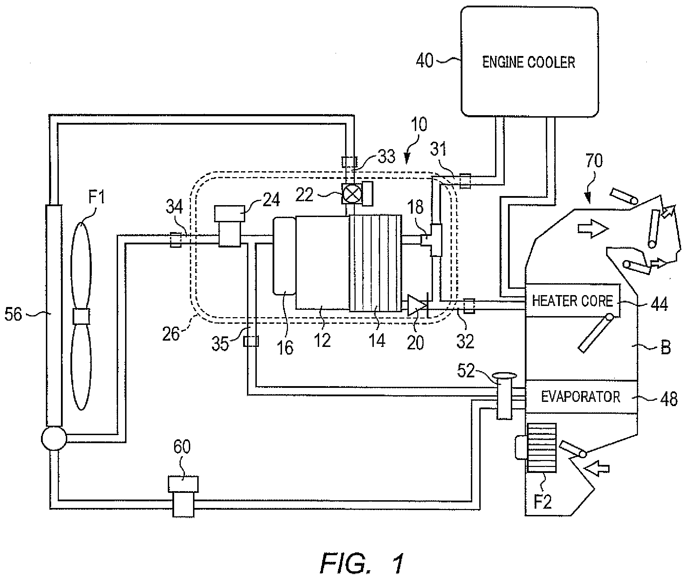

FIG. 1 is a configuration diagram illustrating a vehicle heat pump apparatus and a vehicle air-conditioning apparatus of the embodiment of the present invention.

The vehicle air-conditioning apparatus of the embodiment of the present invention includes: vehicle heat pump apparatus 10; engine cooler 40; heater core 44; evaporator 48; expansion valve 52; outside heat exchanger 56; opening and closing valve 60; and cooling water pipes and refrigerant pipes which connect these components, for example. Heater core 44 and evaporator 48 are included in HVAC system 70 mounted in a vehicle interior. Here, the term "vehicle interior" refers to a space positioned further inward from a fire wall.

Vehicle heat pump apparatus 10 includes electric compressor 12; cooling water-to-refrigerant heat exchanger 14; accumulator 16; three-way valve 18; check valve 20; orifice opening and closing valve 22; opening and closing valve 24; housing 26; cooling water introduction pipe 31; cooling water outlet pipe 32; one refrigerant outlet pipe 33; and two refrigerant introduction pipes 34 and 35.

Electric compressor 12 is electrically driven to compress the suctioned refrigerant to a high-temperature and high-pressure state, and discharges the compressed refrigerant. A suction inlet for the refrigerant in electric compressor 12 communicates with two refrigerant introduction pipes 34 and 35 via accumulator 16, and a refrigerant discharge outlet of electric compressor 12 communicates with an inlet of a refrigerant path of cooling water-to-refrigerant heat exchanger 14.

Cooling water-to-refrigerant heat exchanger 14 has a cooling water path and the refrigerant path, and the cooling water path and the refrigerant path are configured to be in large-area contact with each other so that a large amount of heat exchange can be performed therebetween. An inlet of the refrigerant path communicates with the discharge outlet of electric compressor 12, and an outlet of the refrigerant path communicates with refrigerant outlet pipe 33 provided with orifice opening and closing valve 22. An inlet of the cooling water path is connected to three-way valve 18 via a pipe, and an outlet for the cooling water is connected to check valve 20 via a pipe.

The high-temperature and high-pressure refrigerant flows through cooling water-to-refrigerant heat exchanger 14 while electric compressor 12 is driven, and in contrast, the cooling water is made to flow or not to flow through cooling water-to-refrigerant heat exchanger 14 by the switching of three-way vale. When the cooling water flows through cooling water-to-refrigerant heat exchanger 14, heat is radiated from the high-temperature and high-pressure refrigerant to the cooling water, and when the cooling water does not flow, the high-temperature and high-pressure refrigerant passes through cooling water-to-refrigerant heat exchanger 14 while maintaining substantially the same high temperature.

Three-way valve 18 is switched by electric control to allow the cooling water to flow from cooling water introduction pipe 31 to either one of cooling water-to-refrigerant heat exchanger 14 and cooling water outlet pipe 32.

Check valve 20 prevents a reverse flow of the cooling water to cooling water-to-refrigerant heat exchanger 14.

In the embodiment, three-way valve 18 and check valve 20 correspond to cooling-water flow switching valves that switches the flow path of the cooling water between a flow path formed to bypass cooling water-to-refrigerant heat exchanger 14 and a flow path connected to cooling water-to-refrigerant heat exchanger 14.

Orifice opening and closing valve 22 is an opening and closing valve configured to work as an expansion valve during a heating operation, and is electrically controlled to switch between an open state and a closed state. For example, orifice opening and closing valve 22 has a large-diameter path and an orifice made up of a small-diameter path, and the large-diameter path is configured to be openable and closeable. When the large-diameter path is opened, orifice opening and closing valve 22 allows the refrigerant to pass therethrough, and when the large-diameter path is closed and only the path of the orifice is open, a high-pressure refrigerant expands via the small-diameter path. The expanded refrigerant becomes a low-temperature and low-pressure refrigerant.

Opening and closing valve 24 is equivalent to a switching valve that switches a refrigerant introduction path between two refrigerant introduction pipe 34 and 35. Opening and closing valve 24 is provided between an inlet of refrigerant introduction pipe 34 and a junction of two refrigerant introduction pipes 34 and 35, and is electrically controlled to open and close a path between the inlet and the junction.

Accumulator 16 separates a gaseous refrigerant from a liquefied refrigerant, and delivers only the gaseous refrigerant to electric compressor 12.

Each of three-way valve 18, orifice opening and closing valve 22, and opening and closing valve 24 switches between an open state and a closed state in response to an electric signal transmitted from a control apparatus of the vehicle air-conditioning apparatus. Alternatively, each of three-way valve 18, orifice opening and closing valve 22, and opening and closing valve 24 may be configured to switch between an open state and a closed state in response to a signal that is output by the control section of vehicle heat pump apparatus 10 based on a command from the control apparatus of the vehicle air-conditioning apparatus.

Housing 26 accommodates electric compressor 12, cooling water-to-refrigerant heat exchanger 14, accumulator 16, three-way valve 18, check valve 20, orifice opening and closing valve 22, and opening and closing valve 24, and integrates these components into a single package. The surrounding of housing 26 may be insulated, and electric compressor 12 and cooling water-to-refrigerant heat exchanger 14 may be closely disposed so as to enable heat exchange between the two in the housing 26.

Refrigerant outlet pipe 33 and two refrigerant introduction pipes 34 and 35 are respectively equivalent to a refrigerant outlet section and refrigerant introduction sections of vehicle heat pump apparatus 10. An end of each of refrigerant outlet pipe 33 and refrigerant introduction pipes 34 and 35 is exposed to outside housing 26, and is connected to the refrigerant pipes of the vehicle air-conditioning apparatus. A connector or a socket for pipe connection may be provided at the end of each of refrigerant outlet pipes 33 and refrigerant introduction pipes 34 and 35.

Cooling water introduction pipe 31 and cooling water outlet pipe 32 are respectively equivalent to a cooling water introduction section and a cooling water outlet section of vehicle heat pump apparatus 10. An end of each of cooling water introduction pipe 31 and cooling water outlet pipe 32 is exposed to outside housing 26, and is connected to the cooling water pipes of the vehicle air-conditioning apparatus. The end of each of cooling water introduction pipe 31 and cooling water outlet pipe 32 may be provided with a connector or a socket for pipe connection.

Engine cooler 40 includes a water jacket provided in the internal combustion engine so as to allow the cooling water to flow therethrough, and a pump that makes the cooling water flow through the water jacket. Heat is radiated from the internal combustion engine to the cooling water flowing through the water jacket. An inlet and an outlet of a cooling water path of the water jacket communicate respectively to heater core 44 and cooling water introduction pipe 31 of vehicle heat pump apparatus 10.

Heater core 44 is a section in which the cooling water exchanges heat with air, and is disposed in intake air path B of HVAC system 70, through which air is supplied to the vehicle interior. A cooling water path of heater core 44 communicates with engine cooler 40 and cooling water outlet pipe 32 of vehicle heat pump apparatus 10. Fan F2 introduces outside air or the like to intake air path B of HVAC system 70.

Evaporator 48 is a section in which the refrigerant expanded to a low-temperature and low-pressure state exchanges heat with air, and is disposed in intake air path B of HVAC system 70. When the refrigerant expanded to a low-temperature and low-pressure state passes through evaporator 48, the low-temperature and low-pressure refrigerant evaporates by absorbing heat from air. An inlet of a refrigerant path of evaporator 48 communicates with outside heat exchanger 56 via a pipe while expansion valve 52 and opening and closing valve 60 are interposed between the inlet and outside heat exchanger 56. An outlet of the refrigerant path of evaporator 48 communicates with refrigerant introduction pipe 35 of the vehicle heat pump apparatus via pipes.

Expansion valve 52 allows a high-pressure refrigerant to expand to a low-temperature and low-pressure state, and discharges the low-temperature and low-pressure refrigerant to evaporator 48. Expansion valve 52 is disposed outside vehicle heat pump apparatus 10, and is connected to the vicinity of evaporator 48.

Outside heat exchanger 56 has a refrigerant flow path and an air flow path, and is disposed in the vicinity of the forefront of vehicle in the engine compartment, and in outside heat exchanger 56, the refrigerant flowing through the path exchanges heat with outside air. An inlet of the refrigerant path of outside heat exchanger 56 communicates with refrigerant outlet pipe 33 of vehicle heat pump apparatus 10 via a pipe. An outlet of the refrigerant path branches into two pipes in the middle of the path, and the two pipes communicate respectively to evaporator 48 and refrigerant introduction pipe 34 of vehicle heat pump apparatus 10.

During a heating operation, a low-temperature and low-pressure refrigerant flows through outside heat exchanger 56 and absorbs heat from outside air, and during a cooling operation, a high-temperature and high-pressure refrigerant flows through outside heat exchanger 56, and heat is radiated from a high-temperature and high-pressure refrigerant to outside air. For example, fan F1 blows outside air against outside heat exchanger 56.

Opening and closing valve 60 is provided in the middle of the pipe through which the refrigerant flows from outside heat exchanger 56 to evaporator 48, and is electrically controlled to open and close the pipe.

### [Cooling Operation]

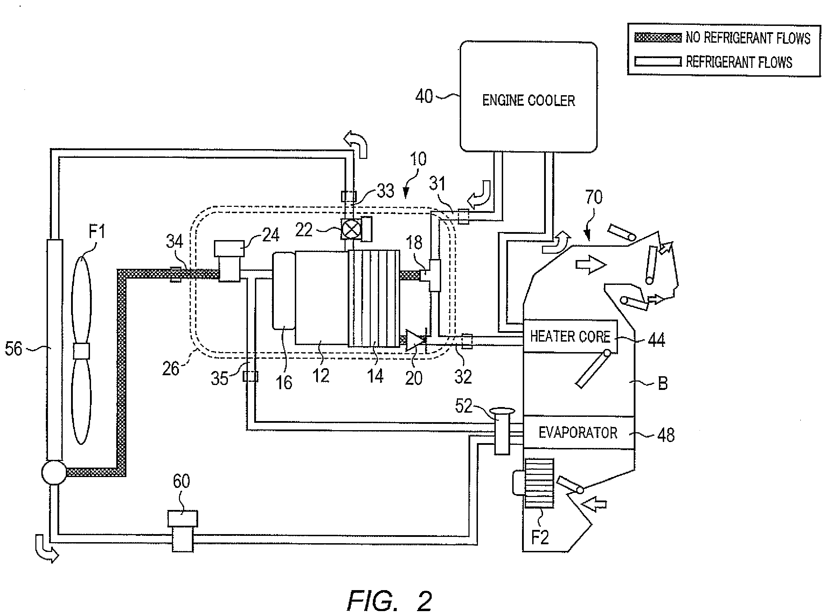

FIG. 2 is a diagram illustrating a cooling operation performed by the vehicle air-conditioning apparatus of the embodiment. Hatched portions of pipes illustrated in FIG 2 indicate that the refrigerant or the cooling water does not flow through the hatched portions.

During the cooling operation, opening and closing valve 24 is switched to close, opening and closing valve 60 is switched to open, orifice opening and closing valve 22 is switched to open, and a port of three-way valve 18 connected to cooling water-to-refrigerant heat exchanger 14 is switched to close.

Due to switching, the cooling water circulates through engine cooler 40 and heater core 44, and in contrast, the cooling water does not flow to cooling water-to-refrigerant heat exchanger 14. Since an air mixture damper in intake air path B of HVAC system 70 is switched in order for air not to flow to heater core 44, ventilation air supplied to the vehicle interior is not heated.

After the refrigerant is compressed to a high-temperature and high-pressure state by electric compressor 12, the high-temperature and high-pressure refrigerant passes through cooling water-to-refrigerant heat exchanger 14 while maintaining a high temperature, and is delivered to outside heat exchanger 56. Thereafter, the refrigerant is cooled in outside heat exchanger 56, and then the cooled refrigerant expands to a low-temperature and low-pressure state while passing through expansion valve 52, and then is delivered to evaporator 48. In evaporator 48, the refrigerant absorbs heat from air to be delivered to the vehicle interior, the air is cooled and the refrigerant evaporates. The evaporated refrigerant returns to electric compressor 12 via accumulator 16.

It is possible to deliver cooled air to the vehicle interior via such a heat pump cycle.

### [Heating Operation]

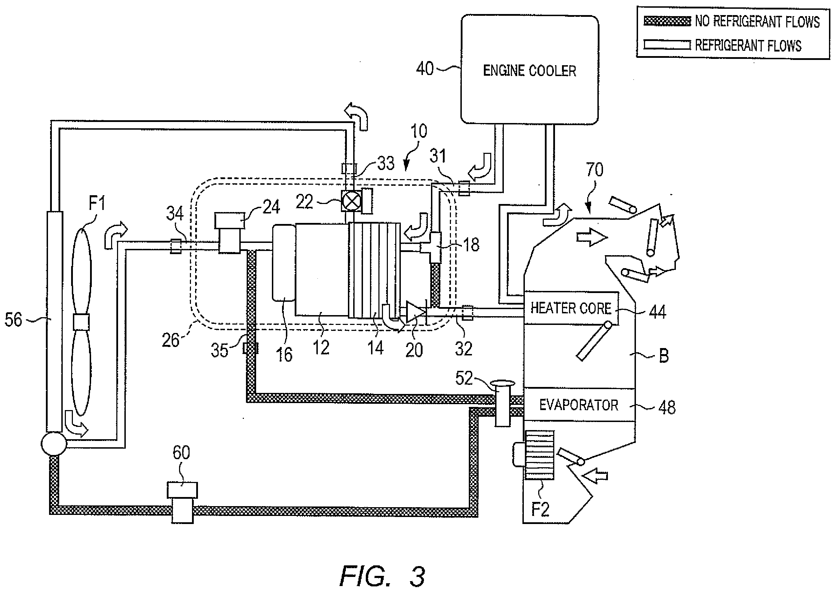

FIG. 3 is a diagram illustrating a heating operation performed by the vehicle air-conditioning apparatus of the embodiment. Hatched potions of pipes illustrated in FIG. 3 indicate that the refrigerant or the cooling water does not flow through the hatched portions.

During the heating operation, opening and closing valve 24 is switched to open, opening and closing valve 60 is switched to close, orifice opening and closing valve 22 is switched to close, and a port of three-way valve 18 connected to cooling water outlet pipe 32 is switched to close.

Due to switching, the cooling water circulates through engine cooler 40, cooling water-to-refrigerant heat exchanger 14, and heater core 44. During the circulation, the cooling water is heated in engine cooler 40 and cooling water-to-refrigerant heat exchanger 14, and in heater core 44, heat is radiated from the cooling water to air flowing through intake air path B of HVAC system 70.

In vehicle heat pump apparatus 10, heat generated by electric compressor 12 is transferred to the cooling water in cooling water-to-refrigerant heat exchanger 14, and the heat discharged from electric compressor 12 is also used as a heat source.

The air mixture damper in intake air path B is switched to allow air to flow to heater core 44, and air to be delivered to the vehicle interior is warmed.

After the refrigerant is compressed to a high-temperature and high-pressure state by electric compressor 12, the high-temperature and high-pressure refrigerant radiates heat to the cooling water while passing through cooling water-to-refrigerant heat exchanger 14. After heat is radiated, the high-pressure refrigerant expands to a low-temperature and low-pressure state while passing through orifice opening and closing valve 22, and is delivered to outside heat exchanger 56. In outside heat exchanger 56, the refrigerant absorbs heat from outside air, and the refrigerant evaporates. The evaporated refrigerant returns to electric compressor 12 via accumulator 16. The refrigerant does not flow through evaporator 48, and heat exchange is not performed in evaporator 48.

It is possible to deliver warm air to the vehicle interior via such an operation. Heat from the engine is effectively used so as to warm air, and a shortage of the engine heat is supplemented by using the heat pump cycle. In addition, heat discharged from electric compressor 12 is effectively used to warm air. Since the heat pump cycle is used for air heating, it is possible to reduce power consumption per the amount of heating.

### [Comparison Between Pipe Paths]

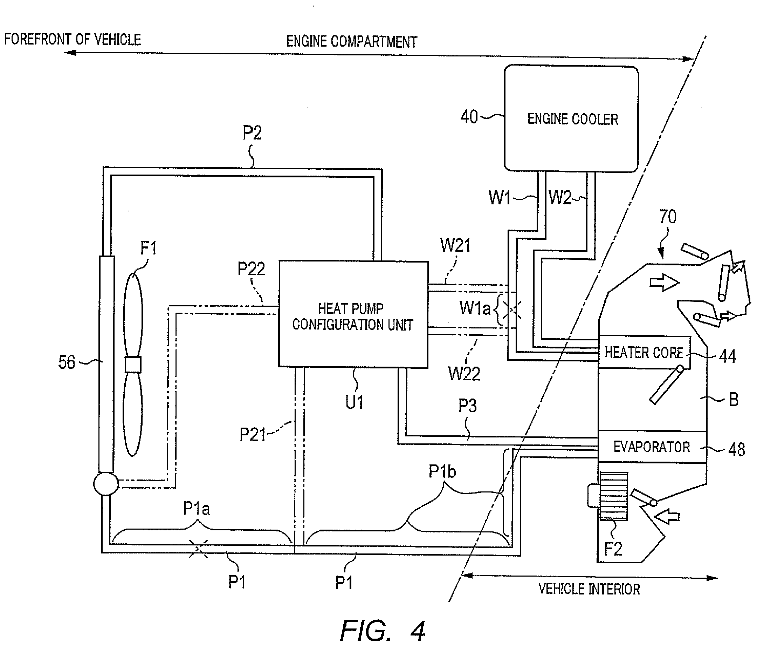

FIG. 4 is a diagram illustrating changes to the refrigerant pipes from the conventional vehicle air-conditioning apparatus. In FIG. 4, solid lines indicate pipes of the conventional vehicle air-conditioning apparatus.

### [Regarding Conventional Vehicle Air-conditioning Apparatus]

In the conventional vehicle air-conditioning apparatus which uses the heat pump cycle only during the cooling operation, outside heat exchanger 56 is disposed in the vicinity of the forefront of vehicle in the engine compartment, and intake air path B, heater core 44, and evaporator 48 are disposed in HVAC system 70 provided in the vehicle interior. Configuration unit U1 of the heat pump cycle is disposed in the engine compartment. In this case, configuration unit U1 is a compressor that compresses a refrigerant.

In this configuration, refrigerant pipes are illustrated by solid lines in FIG. 4. That is, The refrigerant pipes are made up of only three pipes: pipe P1 running from outside heat exchanger 56 at the forefront of vehicle in the engine compartment to evaporator 48 in the vehicle interior; pipe P2 running from the configuration unit (compressor) U1 in the engine compartment to outside heat exchanger 56; and pipe P3 running from evaporator 48 in the vehicle interior to the configuration unit (compressor) U1 in the engine compartment.

While avoiding collision with other components of the vehicle, each of pipes P1 to P3 is routed on a straight path as much as possible in order for the refrigerant not to undergo a large pressure loss. In particular, the layout of pipe P1 to be installed over a long range is preferentially designed to be a straight path as much as possible.

Cooling water pipes W1 and W2 are installed between engine cooler 40 in the engine compartment and heater core 44 in HVAC system 70.

### <Example in which Many Changes Are Made to Refrigerant Pipes>

In the air-conditioning apparatus configured to perform the heating operation using the heat pump cycle, a case given hereinbelow is studied based on the condition that the configuration of intake air path B in HVAC system 70 and a configuration in the engine compartment are not much changed.

In this case, first, configuration unit U1 of the heat pump cycle disposed in the engine compartment is configured to include a compressor that compresses the refrigerant, and a cooling water-to-refrigerant heat exchanger in which heat is radiated from the compressed high-temperature refrigerant to the cooling water. The cooling water-to-refrigerant heat exchanger is required so as to provide heated cooling water to heater core 44 that warms air in intake air path B in HVAC system 70.

Pipes W21 and W22 are provided between configuration unit U1 and heater core 44, and the heated cooling water circulates through pipes W21 and W22. Partial pipe W1a of pipe W1 communicating with engine cooler 40 is cut off, and pipes W21 and W22 are connected to vehicle heat pump apparatus 10 so as to bypass partial pipe W1a.

In this study, when no specific scheme to reduce the changes to the pipes is implemented, refrigerant pipes having different functions are respectively provided between configuration unit U1 and evaporator 48 and between configuration unit U1 and outside heat exchanger 56.

That is, outflow pipes P21 and P1b, and return flow pipe P3 are provided between configuration unit U1 and evaporator 48, and a low-temperature refrigerant flows through the outflow pipes P21 and P1b. In addition, outflow pipe P2 and return flow pipe P22 for discharging heat to the outside (during cooling operation) and absorbing heat from the outside (during heating operation) are provided between configuration unit U1 and outside heat exchanger 56. For example, a unit and an air-conditioning system disclosed in PTL 1 has the aforementioned configuration (refer to FIGS. 21 to 24 in PTL 1).

At this time, the following changes are made to the conventional pipes: two refrigerant pipes P21 and P22 are added, and partial pipe P1a of long pipe P1 provided over the engine compartment is removed.

Since a low-temperature refrigerant flows through pipe P21 disposed in the engine compartment under a high temperature condition, it is necessary to considerably improve insulation for pipe P21, and to dispose configuration unit U1 close to evaporator 48.

### <Regarding Embodiment>

In contrast, as can be seen from the comparison between FIG. 1 and FIG. 4, the configuration of the embodiment is obtained only by making the following change to the refrigerant pipes of the conventional vehicle air-conditioning apparatus: only one refrigerant pipe P22 is added.

In the configuration of the embodiment, since expansion valve 52 can be disposed immediately ahead of evaporator 48, the pipe through which a low-temperature and low-pressure refrigerant is supplied to evaporator 48 is prevented from being disposed in the engine compartment and undergoing a large heat loss.

As such, in vehicle heat pump apparatus 10 and the vehicle air-conditioning apparatus of the embodiment, the change in the refrigerant pipe pattern is minimized compared to the conventional vehicle air-conditioning apparatus which uses the heat pump cycle only during the cooling operation. In the embodiment, it is possible to perform the heating operation using the heat pump cycle.

Accordingly, the embodiment is particularly effective for a case where the conventional vehicle air-conditioning apparatus originally mounted in a vehicle is replaced with the vehicle air-conditioning apparatus capable of performing the heating operation using the heat pump cycle via a minor change or an optional change. That is, when only a space for additional refrigerant pipe P22 is provided, it is possible to apply the vehicle air-conditioning apparatus of the embodiment without affecting the layout of other components of the vehicle.

Typically, since the flow rate of a liquid refrigerant (liquefied refrigerant) is low in a pipe exclusively designed for refrigerant, a pipe having a small pipe diameter is adopted (for example, an outer diameter of 8 mm). In contrast, it is necessary to increase the pipe diameter of a pipe between the expansion valve and the evaporator (for example, an outer diameter of 12 mm).

In the conventional vehicle air-conditioning apparatus, the expansion valve is provided immediately ahead of evaporator 48, pipe P from outside heat exchanger 56 to a point immediately ahead of evaporator 48 adopts a small pipe diameter.

In a case where the vehicle air-conditioning apparatus is changed to a system in which a low-temperature refrigerant is supplied from configuration unit U1 to evaporator 48, since the expansion valve is built into configuration unit U1, pipes P21 and P1b between configuration unit U1 and evaporator 48 are required to have a large pipe diameter. In this case, a change required to be made to the conventional pipes is that the pipe diameter of part (pipe P1b) of originally installed pipe P1 is increased.

In contrast, in the vehicle air-conditioning apparatus of the embodiment, the expansion valve is provided immediately ahead of evaporator 48, and thereby it is no longer necessary to increase the pipe diameter of pipe P1.

### [Variation]

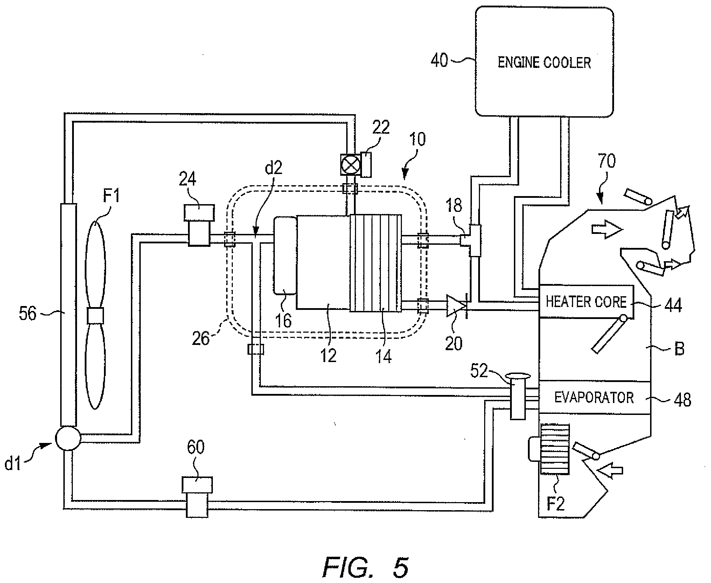

FIG. 5 is a configuration diagram illustrating a variation of the vehicle heat pump apparatus.

As illustrated in FIG. 5, vehicle heat pump apparatus 10 according to the embodiment may have the entirety or any one of the following valves provided outside housing 26: opening and closing valve 24; orifice opening and closing valve 22; three-way valve 18; and check valve 20.

Two opening and closing valves 24 and 60 can be replaced with a three-way valve that is provided at branch locations d1 and d2 of the refrigerant pipe.

The configuration in which the cooling water is allowed to flow while bypassing cooling water-to-refrigerant heat exchanger 14 or via cooling water-to-refrigerant heat exchanger 14 is not limited to the configuration in which three-way valve 18 and check valve 20 are used, and a plurality of opening and closing valves can be configured.

The embodiment of the present invention has been described thus far.

In the embodiment, a pipe is configured as a refrigerant introduction section or a refrigerant outlet section of vehicle heat pump apparatus 10; however, the refrigerant introduction section or the refrigerant outlet section may be configured as a connector or a socket for pipe connection embedded in a wall of housing 26. Similarly, the cooling water introduction section or the cooling water outlet section may be configured as a connector or a socket for pipe connection embedded in a wall of housing 26.

In the configuration described in the embodiment, the cooling water absorbing heat from the internal combustion engine is supplied to the heater core; however, a configuration in which the cooling water flows from only vehicle heat pump apparatus 10 to heater core 44 may be adopted.

A new vehicle air-conditioning apparatus and a new vehicle heat pump apparatus of the embodiment may be mounted in a vehicle. The vehicle heat pump of the embodiment may be replaced with a part of the conventional vehicle air-conditioning apparatus which uses the heat pump cycle only during the cooling operation illustrated in FIG. 4. By virtue of the replacement, it is possible to realize the vehicle air-conditioning apparatus of the embodiment, and to perform the heating operation using the heat pump cycle.

### Industrial Applicability

The present invention can be applied to a vehicle heat pump apparatus and a vehicle air-conditioning apparatus each configured to be mounted in a vehicle.

### Reference Signs List

- 10: Vehicle heat pump apparatus
- 12: Electric compressor
- 14: Cooling water-to-refrigerant heat exchanger
- 16: Accumulator
- 18: Three-way valve
- 20: Check valve
- 22: Orifice opening and closing valve
- 24: Opening and closing valve
- 26: Housing
- 31: Cooling water introduction pipe
- 32: Cooling water outlet pipe
- 33: Refrigerant outlet pipe
- 34, 35: Refrigerant introduction pipe
- 40: Engine cooler
- 44: Heater core
- 48: Evaporator
- 52: Expansion valve
- 56: Outside heat exchanger
- 60: Opening and closing valve
- B: Intake air path
- F1, F2: Fan

## Claims

1. A vehicle heat pump apparatus (10) comprising:
an electric compressor (12) that compresses a suctioned refrigerant and that discharges the compressed refrigerant;
a cooling water-to-refrigerant heat exchanger (14) that is capable of releasing heat to cooling water from a high-temperature and high-pressure refrigerant discharged from the electric compressor (12);
a housing (26) that accommodates the electric compressor (12) and the cooling water-to-refrigerant heat exchanger (14) together;
a cooling water introduction section (31) that allows the cooling water to be introduced into the cooling water-to-refrigerant heat exchanger (14) from outside the housing (26);
a cooling water outlet section (32) that allows the cooling water to flow to outside the housing (26) from the cooling water-to-refrigerant heat exchanger (14);
a single refrigerant outlet section (33) that allows the refrigerant which has passed through the cooling water-to-refrigerant heat exchanger (14) to flow to outside the housing (26);
a first refrigerant introduction section (35) and a second refrigerant introduction section (34) through which a low-pressure refrigerant is introduced from outside the housing (26) and delivered to the electric compressor (12), and
a cooling-water flow switching valve (18, 20) that is capable of switching between delivering the cooling water introduced from the cooling water introduction section (31) to the cooling water outlet section (32) via the cooling water-to-refrigerant exchanger (14), and delivering the cooling water to the cooling water outlet section (32) without intervention of the cooling water-to-refrigerant heat exchanger (14), wherein
refrigerant returned to the first refrigerant introduction section (35) and refrigerant returned to the second refrigerant introduction section (34) are both the refrigerant flowing from the refrigerant outlet section (33), and
the housing (26) accommodates the cooling-water flow switching valve (18, 20).

2. The vehicle heat pump apparatus (10) according to claim 1, further comprising a switching valve (24) that switches an introduction path of the low-pressure refrigerant between the first refrigerant introduction section (35) and the second refrigerant introduction section (34).

3. The vehicle heat pump apparatus (10) according to claim 2, further comprising an opening and closing valve (22) having an expansion valve function, the valve (22) being capable of switching between delivering the high-pressure refrigerant that has passed through the cooling water-to-refrigerant heat exchanger (14) to the refrigerant outlet section (33) while causing the refrigerant to expand, and delivering the high-pressure refrigerant while keeping the refrigerant in a high pressure state.

4. The vehicle heat pump apparatus (10) according to claim 3, wherein the housing (26) accommodates the switching valve (24) and the opening and closing valve (22) having the expansion valve function.

5. The vehicle heat pump apparatus (10) according to claim 1, further comprising an accumulator (16) that is disposed on a refrigerant suction side of the electric compressor (12), wherein
the housing (26) accommodates the accumulator (16).

6. The vehicle heat pump apparatus (10) according to claim 1, wherein the vehicle heat pump apparatus (10) enables a heating operation using a heat pump cycle by being partially replaced with a part of a vehicle air-conditioning apparatus that uses a heat pump cycle only during a cooling operation.

7. A vehicle air-conditioning apparatus comprising:
an internal combustion engine cooler (40) that causes cooling water to absorb heat from an internal combustion engine of a vehicle;
a heat exchanger for heating (44) that causes heat to be released from high-temperature cooling water to air which is delivered to a vehicle interior;
an evaporator (48) that causes a low-temperature refrigerant to absorb heat from air which is delivered to the vehicle interior;
an outside heat exchanger (56) that allows the refrigerant to exchange heat with air outside the vehicle interior; and
the vehicle heat pump apparatus (10) according to claim 1, wherein
the internal combustion engine cooler (40) and the heat exchanger for heating (44) are connected to each other in series between the cooling water outlet section (32) and the cooling water introduction section (31) of the vehicle heat pump apparatus (10),
the outside heat exchanger (56) and the evaporator (48) are connected to each other in series between the refrigerant outlet section (33) of the vehicle heat pump apparatus (10) and the first refrigerant introduction section (35), and
a refrigerant path between the outside heat exchanger (56) and the evaporator (48) branches out and is connected to the second refrigerant introduction section (34).

8. The vehicle air-conditioning apparatus according to claim 8, further comprising an expansion valve (52) that delivers a high-pressure refrigerant to the evaporator (48) while causing the high-pressure refrigerant to expand, wherein
the expansion valve (52) is disposed outside the vehicle heat pump apparatus (10) and on an upstream side of the evaporator (48).

9. The vehicle air-conditioning apparatus according to claim 8, further comprising an opening and closing valve (60) that is capable of opening and closing the refrigerant path between the outside heat exchanger (56) and the evaporator (48).

## Patentansprüche

1. Fahrzeugwärmepumpenanlage (10), umfassend:
einen elektrischen Kompressor (12), der ein angesaugtes Kältemittel komprimiert und der das komprimierte Kältemittel ablässt;
einen Kühlwasser-zu-Kältemittel-Wärmetauscher (14), der in der Lage ist, Wärme an Kühlwasser von einem Hochtemperatur- und Hochdruck-Kältemittel abzugeben, das aus dem elektrischen Kompressor (12) abgelassen wird;
ein Gehäuse (26), das den elektrischen Kompressor (12) und den Kühlwasser-zu-Kältemittel-Wärmetauscher (14) zusammen aufnimmt;
einen Kühlwassereinleitabschnitt (31), der zulässt, dass das Kühlwasser in den Kühlwasser-zu-Kältemittel-Wärmetauscher (14) von außerhalb des Gehäuses (26) eingeleitet wird;
einen Kühlwasserauslassabschnitt (32), der zulässt, dass das Kühlwasser zur Außenseite des Gehäuses (26) von dem Kühlwasser-zu-Kältemittel-Wärmetauscher (14) fließt;
einen einzelnen Kältemittelauslassabschnitt (33), der zulässt, dass das Kältemittel, das durch den Kühlwasser-zu-Kältemittel-Wärmetauscher (14) verlaufen ist, zur Außenseite des Gehäuses (26) fließt;
einen ersten Kältemitteleinleitabschnitt (35) und einen zweiten Kältemitteleinleitabschnitt (34), durch die ein Niederdruck-Kältemittel von außerhalb des Gehäuses (26) eingeleitet wird und dem elektrischen Kompressor (12) zugeführt wird, und
ein Kühlwasserstrom-Umschaltventil (18, 20), das in der Lage ist, zwischen einem Zuführen des Kühlwassers, das von dem Kühlwassereinleitabschnitt (31) eingeleitet wird, zu dem Kühlwasserauslassabschnitt (32) über den Kühlwasser-zu-Kältemittel-Wärmetauscher (14) und einem Zuführen des Kühlwassers zu dem Kühlwasserauslassabschnitt (32) ohne Intervention des Kühlwasser-zu-Kältemittel-Wärmetauschers (14) umzuschalten, wobei
sowohl Kältemittel, das zu dem ersten Kältemitteleinleitabschnitt (35) zurückgeleitet wird, als auch Kältemittel, das zu dem zweiten Kältemitteleinleitabschnitt (34) zurückgeleitet wird, das Kältemittel ist, das aus dem Kältemittelauslassabschnitt (33) fließt, und
das Gehäuse (26) das Kühlwasserstrom-Umschaltventil (18, 20) aufnimmt.

2. Fahrzeugwärmepumpenanlage (10) nach Anspruch 1, ferner umfassend ein Umschaltventil (24), das einen Einleitpfad des Niederdruck-Kältemittels zwischen dem ersten Kältemitteleinleitabschnitt (35) und dem zweiten Kältemitteleinleitabschnitt (34) umschaltet.

3. Fahrzeugwärmepumpenanlage (10) nach Anspruch 2, ferner umfassend ein Öffhungs- und Schließventil (22) mit einer Expansionsventilfunktion, wobei das Ventil (22) in der Lage ist, zwischen einem Zuführen des Hochdruck-Kältemittels, das durch den Kühlwasser-zu-Kältemittel-Wärmetauscher (14) verlaufen ist, zu dem Kältemittelauslassabschnitt (33), während das Kältemittel zum Expandieren veranlasst wird, und einem Zuführen des Hochdruck-Kältemittels, während das Kältemittel in einem Hochdruckzustand gehalten wird, umzuschalten.

4. Fahrzeugwärmepumpenanlage (10) nach Anspruch 3, wobei das Gehäuse (26) das Umschaltventil (24) und das Öffhungs- und Schließventil (22) mit der Expansionsventilfunktion aufnimmt.

5. Fahrzeugwärmepumpenanlage (10) nach Anspruch 1, ferner umfassend einen Akkumulator (16), der auf einer Kältemittelansaugseite des elektrischen Kompressors (12) angeordnet ist, wobei
das Gehäuse (26) den Akkumulator (16) aufnimmt.

6. Fahrzeugwärmepumpenanlage (10) nach Anspruch 1, wobei die Fahrzeugwärmepumpenanlage (10) einen Heizbetrieb durch Verwenden eines Wärmepumpenzyklus ermöglicht, indem sie teilweise durch ein Teil einer Fahrzeugklimaanlage ersetzt wird, das einen Wärmepumpenzyklus nur während eines Kühlbetriebs verwendet.

7. Fahrzeugklimaanlage, umfassend:
einen Verbrennungsmotorkühler (40), der veranlasst, dass Kühlwasser Wärme von einem Verbrennungsmotor eines Fahrzeugs absorbiert;
einen Wärmetauscher zum Erhitzen (44), der veranlasst, dass Wärme von Hochtemperatur-Kühlwasser an die Luft freigesetzt wird, die einem Fahrzeuginnern zugeführt wird;
einen Verdampfer (48), der veranlasst, dass ein Niedertemperatur-Kältemittel Wärme aus der Luft absorbiert, die dem Fahrzeuginnern zugeführt wird;
einen äußeren Wärmetauscher (56), der zulässt, dass das Kältemittel Wärme mit Luft von außerhalb des Fahrzeuginnern austauscht; und
die Fahrzeugwärmepumpenanlage (10) nach Anspruch 1, wobei
der Verbrennungsmotorkühler (40) und der Wärmetauscher zum Erhitzen (44) in Reihe miteinander zwischen dem Kühlwasserauslassabschnitt (32) und dem Kühlwassereinleitabschnitt (31) der Fahrzeugwärmepumpenanlage (10) geschaltet sind,
der äußere Wärmetauscher (56) und der Verdampfer (48) in Reihe miteinander zwischen dem Kältemittelauslassabschnitt (33) der Fahrzeugwärmepumpenanlage (10) und dem ersten Kältemitteleinleitabschnitt (35) geschaltet sind und
sich ein Kältemittelpfad zwischen dem äußeren Wärmetauscher (56) und dem Verdampfer (48) verzweigt und mit dem zweiten Kältemitteleinleitabschnitt (34) verbunden ist.

8. Fahrzeugklimaanlage nach Anspruch 8, ferner umfassend ein Expansionsventil (52), das dem Verdampfer (48) ein Hochdruck-Kältemittel zuführt, während das Hochdruck-Kältemittel zum Expandieren veranlasst wird, wobei
das Expansionsventil (52) außerhalb der Fahrzeugwärmepumpenanlage (10) und auf einer stromaufwärtigen Seite des Verdampfers (48) angeordnet ist.

9. Fahrzeugklimaanlage nach Anspruch 8, ferner umfassend ein Öffhungs- und Schließventil (60), das in der Lage ist, den Kältemittelpfad zwischen dem äußeren Wärmetauscher (56) und dem Verdampfer (48) zu öffnen und zu schließen.

## Revendications

1. Appareil de thermopompe de véhicule (10) comprenant :
un compresseur électrique (12) qui comprime un fluide frigorigène aspiré et qui évacue le fluide frigorigène comprimé ;
un échangeur de chaleur eau de refroidissement-fluide frigorigène (14) qui est capable de libérer de chaleur vers l'eau de refroidissement depuis un fluide frigorigène haute température et haute pression évacué depuis le compresseur électrique (12) ;
un boîtier (26) qui loge le compresseur électrique (12) et l'échangeur de chaleur eau de refroidissement-fluide frigorigène (14) ensemble ;
une section d'introduction d'eau de refroidissement (31) qui permet à l'eau de refroidissement d'être introduite dans l'échangeur de chaleur eau de refroidissement-fluide frigorigène (14) depuis l'extérieur du boîtier (26) ;
une section de sortie d'eau de refroidissement (32) qui permet à l'eau de refroidissement de s'écouler à l'extérieur du boîtier (26) depuis l'échangeur de chaleur eau de refroidissement-fluide frigorigène (14) ;
une section de sortie de fluide frigorigène unique (33) qui permet au fluide frigorigène qui est passé à travers l'échangeur de chaleur eau de refroidissement-fluide frigorigène (14) de s'écouler à l'extérieur du boîtier (26) ;
une première section d'introduction de fluide frigorigène (35) et une deuxième section d'introduction de fluide frigorigène (34) à travers lesquelles un fluide frigorigène basse pression est introduit depuis l'extérieur du boîtier (26) et délivré au compresseur électrique (12), et
une vanne de commutation d'écoulement d'eau de refroidissement (18, 20) qui est capable d'effectuer une commutation entre la délivrance de l'eau de refroidissement introduite depuis la section d'introduction d'eau de refroidissement (31) à la section de sortie d'eau de refroidissement (32) via l'échangeur de chaleur eau de refroidissement-fluide frigorigène (14) et la délivrance de l'eau de refroidissement à la section de sortie d'eau de refroidissement (32) sans l'intervention de l'échangeur de chaleur eau de refroidissement-fluide frigorigène (14), où
le fluide frigorigène renvoyé à la première section d'introduction de fluide frigorigène (35) et le fluide frigorigène renvoyé à la deuxième section d'introduction de fluide frigorigène (34) sont tous deux le fluide frigorigène s'écoulant depuis la section de sortie de fluide frigorigène (33), et
le boîtier (26) loge la vanne de commutation d'écoulement d'eau de refroidissement (18,20).

2. Appareil de thermopompe de véhicule (10) selon la revendication 1, comprenant en outre une vanne de commutation (24) qui commute une voie d'introduction du fluide frigorigène basse pression entre la première section d'introduction de fluide frigorigène (35) et la deuxième section d'introduction de fluide frigorigène (34).

3. Appareil de thermopompe de véhicule (10) selon la revendication 2, comprenant en outre une vanne d'ouverture et de fermeture (22) ayant une fonction de vanne de détente, la vanne (22) étant capable d'effectuer une commutation entre la délivrance du fluide frigorigène haute pression qui est passé à travers l'échangeur de chaleur eau de refroidissement-fluide frigorigène (14) jusqu'à la section de sortie de fluide frigorigène (33) tout en provoquant une détente du fluide frigorigène, et la délivrance du fluide frigorigène haute pression tout en gardant le fluide frigorigène dans un état de haute pression.

4. Appareil de thermopompe de véhicule (10) selon la revendication 3, dans lequel le boîtier (26) loge la vanne de commutation (24) et la vanne d'ouverture et de fermeture (22) ayant la fonction de vanne de détente.

5. Appareil de thermopompe de véhicule (10) selon la revendication 1, comprenant en outre un accumulateur (16) qui est disposé sur un côté aspiration de fluide frigorigène du compresseur électrique (12) où
le boîtier (26) loge l'accumulateur (16).

6. Appareil de thermopompe de véhicule (10) selon la revendication 1, l'appareil de thermopompe de véhicule (10) permettant une opération de chauffe à l'aide d'un cycle de thermopompe en étant partiellement remplacé par une partie d'un appareil de climatisation de véhicule qui utilise un cycle de thermopompe uniquement pendant une opération de refroidissement.

7. Appareil de climatisation de véhicule, comprenant :
un dispositif de refroidissement de moteur à combustion interne (40) qui amène une eau de refroidissement à absorber de la chaleur depuis un moteur à combustion interne d'un véhicule ;
un échangeur de chaleur de chauffe (44) qui amène la chaleur à être libérée de l'eau de refroidissement haute température à l'air qui est délivré à un intérieur d'un véhicule ;
un évaporateur (48) qui amène un fluide frigorigène haute température à absorber la chaleur de l'air qui est délivré à l'intérieur de véhicule ;
un échangeur de chaleur extérieur (56) qui permet au fluide frigorigène d'échanger de la chaleur avec l'air à l'extérieur de l'intérieur de véhicule ; et
Appareil de thermopompe de véhicule (10) selon la revendication 1, dans lequel
le dispositif de refroidissement de moteur à combustion interne (40) et l'échangeur de chaleur pour la chauffe (44) sont raccordés l'un à l'autre en série entre la section de sortie d'eau de refroidissement (32) et la section d'introduction d'eau de refroidissement (31) de l'appareil de thermopompe de véhicule (10),
l'échangeur de chaleur extérieur (56) et l'évaporateur (48) sont raccordés l'un à l'autre en série entre la section de sortie de fluide frigorigène (33) de l'appareil de thermopompe de véhicule (10) et la première section d'introduction de fluide frigorigène (35), et
une voie de fluide frigorigène entre l'échangeur de chaleur extérieur (56) et l'évaporateur (48) se ramifie et est raccordée à la deuxième section d'introduction de fluide frigorigène (34).

8. Appareil de climatisation de véhicule selon la revendication 8, comprenant en outre une vanne de détente (52) qui délivre un fluide frigorigène haute pression à l'évaporateur (48) tout en provoquant une détente du fluide frigorigène, où
la vanne de détente (52) est disposée à l'extérieur de l'appareil de thermopompe de véhicule (10) et sur un côté amont de l'évaporateur (48).

9. Appareil de climatisation de véhicule selon la revendication 8, comprenant en outre une vanne d'ouverture et de fermeture (60) qui est capable d'ouvrir et de fermer la voie de fluide frigorigène entre l'échangeur de chaleur extérieur (56) et l'évaporateur (48).
